(19)

**Europäisches Patentamt**
**European Patent Office**
**Office européen des brevets**

(11)　**EP 4 417 590 A1**

(12)　**EUROPEAN PATENT APPLICATION**

(43) Date of publication:
　　21.08.2024　Bulletin 2024/34

(21) Application number: 23305206.7

(22) Date of filing: **16.02.2023**

(51) International Patent Classification (IPC):
　　***C04B 28/08*** (2006.01)　　　***C04B 40/00*** (2006.01)
　　***C04B 103/12*** (2006.01)

(52) Cooperative Patent Classification (CPC):
　　(C-Sets available)
　　**C04B 40/0039; C04B 28/08;** C04B 2103/12;
　　C04B 2111/00155; C04B 2111/00172　　　(Cont.)

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**KH MA MD TN**

(71) Applicants:
　　• **Ecocem Materials Limited**
　　　**Dublin 3 D03E0C0 (IE)**
　　• **Institut National des Sciences Appliquées**
　　　**de Toulouse**
　　　**31077 Toulouse Cedex 4 (FR)**
　　• **Université Paul Sabatier Toulouse III**
　　　**31400 Toulouse (FR)**

(72) Inventors:
　　• **ANDRE, Ludovic**
　　　**75012 PARIS (FR)**
　　• **CYR, Martin**
　　　**31077 TOULOUSE CEDEX 4 (FR)**
　　• **ALFANI, Roberta**
　　　**75012 PARIS (FR)**
　　• **FROUIN, Laurent**
　　　**75012 PARIS (FR)**
　　• **BACQUIE, Céline**
　　　**75012 PARIS (FR)**
　　• **JAININ, Yoann**
　　　**75012 PARIS (FR)**

(74) Representative: **Plasseraud IP**
　　**104 Rue de Richelieu**
　　**CS92104**
　　**75080 Paris Cedex 02 (FR)**

(54)　**ACCELERATOR FOR SHOTCRETE FORMULATION, SHOTCRETE FORMULATIONS AND METHOD FOR MAKING SAME**

(57)　The invention relates to an accelerator composition for hardening a wet shotcrete formulation comprising:

A1. between 50 % by weight to 85% by weight of a cement containing at least 15 wt% aluminate, and

A2. between 15% by weight and 50% by weight of at least one alkali sulfate.

EP 4 417 590 A1

(52) Cooperative Patent Classification (CPC): (Cont.)

C-Sets
**C04B 28/08, C04B 7/02, C04B 7/32, C04B 7/323,**
**C04B 22/064, C04B 22/085, C04B 22/10,**
**C04B 22/124, C04B 22/14, C04B 22/147,**
**C04B 24/122, C04B 40/0608, C04B 2103/0088;**
**C04B 40/0039, C04B 7/32, C04B 7/323,**
**C04B 22/085, C04B 22/10, C04B 22/124,**
**C04B 22/14, C04B 22/147, C04B 24/122;**
C04B 2103/12, C04B 7/32, C04B 7/323,
C04B 22/147

**Description**

**Technical Field**

This disclosure pertains to the field of concrete formulations. In particular, this disclosure is directed to shotcrete formulation, especially shotcrete formulations intended to be sprayed in closed areas.

**Background Art**

Shotcrete is a type of concrete that is sprayable onto surfaces by compressed air. As in all composition comprising cement the replacement of ordinary Portland cement by more environmentally friendly cement represents a huge challenge.

Indeed, Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCO_3 \text{ (s)} \rightarrow CaO \text{ (s)} + CO_2 \text{ (g) (Eq. (1))}$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

However, shotcrete is almost always associated with a powerful setting and hardening accelerator to promote early strength. Nowadays, accelerators are most often acidic. Thus, since GGBS contains sulfur (S), accelerated shotcrete formulations using this material leads to the formation of toxic hydrogen sulfur ($H_2S$). Since shotcrete are essentially used in closed areas like underground tunnels, it is not possible to use a formulation that produces $H_2S$ when hardening.

Document WO 2021/156808 discloses an activator for a slag cement based shotcrete comprising a first constituent and a second constituent, said first constituent containing a calcium aluminate cement and optionally a retarding and/or plasticizing agent, and said second constituent containing one or more salts, preferably an aqueous solution of one or more salts, in particular carbonates so as to avoid $H_2S$ formation.

In addition, for being usable in an underground tunnel, the shotcrete needs to present a setting time as short as possible so has to harden with a minimum of mechanical strength. Typically, a suitable shotcrete reaches a mechanical strength of at least 4 MPa in a maximum of 4 hours.

Rapid setting cements are known, for example as mentioned in document FR 2 233 295, which discloses a process for preparing a rapid setting cement by adding an accelerator containing calcium aluminate and inorganic sulfate.

In this context, the invention aims at addressing at least one of the above problems and/or needs, through fulfilling at least one of the following objectives:

- O1- Providing an accelerator for shotcrete formulation comprising GGBS that does not lead to the formation of $H_2S$

- O2- Providing a shotcrete formulation comprising GGBS and presenting a setting time leading to a hardened shotcrete article having a mechanical strength of at least 4 MPa in a maximum of 4 hours.

**Summary**

At least one of the above objectives is reached thanks to an accelerator composition for hardening a wet shotcrete formulation comprising:

A1. between 50 % by weight to 85% by weight of a cement containing at least 15 wt% aluminate, and

A2. between 15% by weight and 50% by weight of at least one alkali sulfate.

The invention is also about the use of the above-mentioned accelerator composition for hardening a wet shotcrete formulation as well as a method for hardening a wet shotcrete formulation comprises a step of adding the accelerator composition mentioned above to a dry shotcrete or a wet shotcrete.

The invention also concerns a dry shotcrete formulation comprising:

A) The accelerator composition mentioned above,

B) A binder composition,

C) Aggregates,

wherein the accelerator represents between 4 % by weight to 16% by weight with respect to the total weight of the binder composition.

The invention is in addition directed to a wet shotcrete formulation comprising:

A) An accelerator composition mentioned above,

B) A binder composition,

C) Aggregates,

D) Water

wherein the accelerator composition represents between 4 % by weight to 16% by weight with respect to the total weight of the binder composition,

and wherein the water is present at a weight ratio water/binder composition comprised between 0.30 and 0.60.

Moreover, the invention further concerns a hardened shotcrete article obtained after spraying and hardening the wet shotcrete formulation mentioned above.

Furthermore, the invention is about a method for preparing dry sprayable shotcrete formulation and spraying said formulation on a surface comprising the step of:

(M1-S1)        Providing an accelerator composition as mentioned above,
(M1-S2)        Providing a binder composition,
(M1-S3)        Providing aggregates,
(M1-S4)        Mixing said accelerator composition, said binder composition and said aggregates, resulting in a dry shotcrete formulation,
(M1-S5)        Pumping the dry shotcrete formulation obtained at step M1-S4, resulting in a dry shotcrete flow,
(M1-S6)        Adding water into the dry shotcrete flow obtained at step M1-S5 resulting in a wet shotcrete formulation, upstream to a spraying nozzle,
(M1-S7)        Spraying the wet shotcrete formulation obtained at step M1-S6 through said spraying nozzle,

wherein the accelerator represents between 4 % by weight to 16% by weight with respect to the total weight of the binder composition,

and wherein the water is present at a weight ratio water/binder composition comprised between 0.30 and 0.60.

In addition, the invention is about a method for preparing wet sprayable shotcrete formulation and spraying said formulation on a surface comprising the step of:

(M2-S1)        Providing a binder composition,
(M2-S2)        Providing aggregates,
(M2-S3)        Mixing said binder composition and said aggregates, resulting in a dry shotcrete formulation,
(M2-S4)        Mixing the dry shotcrete formulation obtained at step M2-S3 with water resulting in a wet shotcrete formulation,
(M2-S5)        Pumping the wet shotcrete formulation obtained at step M2-S4 resulting in a wet shotcrete flow,

(continued)

| (M2-S6) | Adding an accelerator composition as mentioned above into the wet shotcrete flow obtained at step M2-S5, upstream to a spraying nozzle, |
| --- | --- |
| (M2-S7) | Spraying the wet shotcrete formulation including said accelerator composition obtained at step M2-S6 through said spraying nozzle, |

wherein the accelerator represents between 4 % by weight to 16% by weight with respect to the total weight of the binder composition,

and wherein the water is present at a weight ratio water/binder composition comprised between 0.30 and 0.60.

**Brief Description of Drawings**

**Fig. 1**

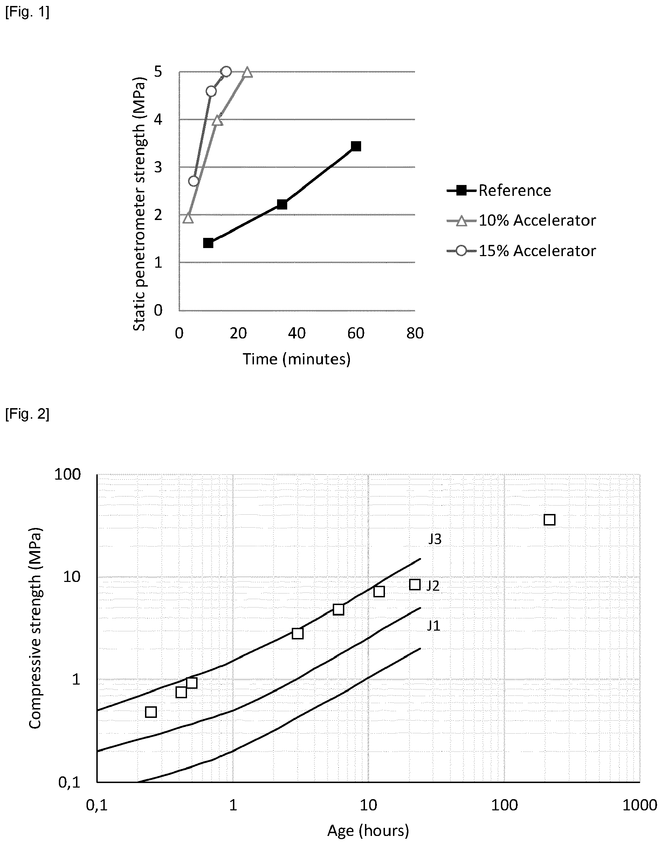

[Fig. 1] is a graphic representing the compressive strength versus time of a dry shotcrete, in the first minutes after shotcreting measured with a static penetrometer (5MPa being the upper limit of detection of the apparatus).

**Fig. 2**
[Fig. 2] is a graphic, presenting J1, J2, J3 classes according to NF EN 14487-1 used as reference to classify shotcrete performances, representing the compressive strength versus time of a wet shotcrete.

**Definitions**

According to the terminology of this text, the following non limitative definitions have to be taken into consideration:

"slag" denotes a stony by-product matter separated from metals during the smelting or refining of ore.

"GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.

"binder" refers to "hydraulic binder" meaning any material that hardens just by adding water, like GGBS and cement.

"cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

"Pozzolanic material" is understood as meaning a powdery substance that hardens by adding a mixture of water and a CaO source, either from natural origin or derived from a natural resource to which a temperature controlled treatment was applied.

"Dry" composition/formulation refers to a composition/formulation that is in the form of powder and ready to be mixed with water. In other words, the dry composition/formulation of the invention may content some moisture, but it essentially contains solid components which are intended to be mixed with water before its application.

"Dry shotcrete" refers to a material composed of binder(s), aggregates such as sand and gravel and other components, like admixtures.

"Wet shotcrete" refers to a material composed of binder(s), aggregates such as sand and gravel and other components, like admixtures and water.

"Hardened shotcrete" refers to the hardened product obtained from (wet) shotcrete after reaction with the water.

**Detailed description**

*The accelerator composition*

As mentioned above, the invention concerns an accelerator composition for hardening a wet shotcrete formulation comprising:

A1. between 50 % by weight to 85% by weight of a cement containing at least 15 wt% aluminate, and

A2. between 15% by weight and 50% by weight of at least one alkali sulfate.

In a preferred embodiment, the accelerator composition comprises between 55 % by weight to 80% by weight of cement A1 and between 20% by weight and 45% by weight of at least one alkali sulfate.

The alkali sulfate is preferably chosen in the group consisting of sodium sulfate, potassium sulfate, lithium sulfate and mixture thereof. In a particular embodiment the alkali sulfate is sodium sulfate.

In a preferred embodiment, the cement A1 is selected in the group comprising, more preferably consisting of, calcium aluminate cement (CAC), calcium sulfoaluminate cement (CSA), Belite-Ye'elimite-Ferritecement (BYF) and mixtures thereof.

The calcium aluminate cement may be composed by at least one of the following crystalline form: monocalcium aluminate ($CaO.Al_2O_3$), monocalcium dialuminate ($CaO.2Al_2O_3$), monocalcium hexa-aluminate ($CaO.6Al_2O_3$), dicalcium alumina silicate ($2CaO.Al_2O_3.SiO_2$), tricalcium aluminate ($3CaO.Al_2O_3$), dodecacalcium hepta-aluminate ($12CaO.7Al_2O_3$), ye'elimite ($4CaO.3Al_2O_3.SO_3$), calcium aluminoferrite ($4CaO \cdot Al_2O_3 \cdot Fe_2O_3$).

In more preferred embodiments, cement A1 is a mixture of between 21wt% and 79wt%, preferably between 35wt% and 79wt%, more preferably between 45wt% and 79wt% of calcium aluminate cement (CAC), and 21wt% and 79wt%, preferably between 21% and 65wt%, more preferably between 21wt% and 35wt% of calcium sulfoaluminate cement (CSA). In these embodiments Increasing the quantity of CSA increases the compressive strength at 28 days, but also increases the setting time needed to reach 1 MPa. If there is too much CSA, it may be impossible to reach 1 MPa in 4 hours.

In specific embodiments, the accelerator composition may also further comprise an alkaline metal salt an alkanolamine or mixture thereof, preferably said alkaline metal salt is selected in the group comprising, more preferably consisting of, sodium chloride, potassium chloride, lithium chloride, sodium carbonate, potassium carbonate, lithium carbonate, sodium nitrate, potassium nitrate, lithium nitrate, sodium nitrite, potassium nitrite, lithium nitrite, calcium nitrate, calcium nitrite, sodium thiocyanate, potassium thiocyanate, lithium thiocyanate and mixtures thereof, preferably said alkanolamine is selected in the group comprising, more preferably consisting of, triethanolamine (TEA), triisopropanolamine (TIPA), diethanolamine (DEA).

*The dry shotcrete formulation*

As mentioned above, the invention also concerns a dry shotcrete formulation comprising:

A) The accelerator composition mentioned above,

B) A binder composition,

C) Aggregates,

wherein the accelerator composition represents between 4 % by weight and 16% by weight with respect to the total weight of the binder composition.

Thus, according to the invention the accelerator represents from 4% to 16% of the weight of the binder composition, in other words, the binder composition represents a reference of 100% and the accelerator composition is in an amount of between 4% by weight to 16% by weight of the 100% of said binder composition.

In a particular embodiment, the accelerator represents from 5% to 15% of the weight of the binder composition, preferably the accelerator represents from 8% to 12% of the weight of the binder composition.

*The binder composition*

In preferred embodiments, the binder composition is selected in the group comprising, preferably consisting of, a clinker source, a lime source, ground granulated blast furnace slag (GGBS) and mixtures thereof. In preferred embodiments, said clinker source is Ordinary Portland Cement (OPC), Portland clinker, Portland clinker containing cement and cement as defined in standards NF EN 197-1 and NF EN 197-5, or mixture thereof and said lime source is lime, quick lime, hydrated lime, natural hydraulic lime, or mixtures thereof.

The accelerator of the invention has been particularly designed for allowing a great amount of GGBS. Thanks to the accelerator of the invention, it is possible to incorporate up to 95wt% of GGBS relative to the binder composition.

In addition, the accelerator of the invention allows to decrease the setting time with an increase of the proportion of GGBS in the binder.

In specific embodiments, the binder composition is a mixture of:

a. between 5% and 95% of a clinker source or a lime source, or mixtures thereof, and

b. between 5% and 95% of ground granulated blast furnace slag, pozzolanic materials or mixtures thereof.

A pozzolanic material is a material which is able to react with lime or cement, in the presence of water, so as to produce hydrates. In other words, a pozzolanic material is a material that enhances the hydraulic behavior of Portland cement and lime, a hydraulic behavior being the capacity of setting and hardening in the presence of water.

Preferably, the pozzolanic material is selected in the group comprising, preferably consisting of, silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

*The aggregates*

Aggregates comprise a large category of particulate material used in construction, including sands, gravels, crushed stones, slag (not-granulated), recycled concrete and geosynthetic aggregates. They serve as reinforcement to add strength to the overall composite material.

*Optional additives*

Advantageously, said dry industrial concrete or mortar formulation can also include, apart from aggregates, one or several ingredients, especially functional admixtures, additions and fibres,. In particular, these ingredients are chosen among additives selected from the group comprising filler, supplementary cementitious material, water reducing polymers, latex, water retention agent, rheological agent, defoamer/antifoams, biocide, pigment, flame retardant, air-entraining agents and retarders like the following compounds:

• *Water retention agent.*

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

• *Rheological agent*

The possible rheological agent (also named a "thickener") is preferably chosen in the group comprising, more preferably consisting of, starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

• *Defoamer/Antifoams*

The possible defoamer is preferably chosen in the group comprising, more preferably consisting of, polyether polyols and mixtures thereof.

• *Biocide*

The possible biocide is preferably chosen in the group comprising, more preferably consisting of, mineral oxides like zinc oxide and mixtures thereof.

• *Pigment*

The possible pigment is preferably chosen in the group comprising, more preferably consisting of, $TiO_2$, iron oxide and mixtures thereof.

*• Flame retardant*

Flame retardant (or flame proof agent) makes it possible to increase the fire resistance and/or to shrink the speed of flame spreading of the article.

*• Air-entraining agents*

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

*• Retarders*

Retarders are advantageously chosen in the group comprising, more preferably consisting in tartric acid and its salts: sodium or potassium salts, citric acid and its salts: sodium (trisodic citrate) and their mixes.
In addition, other components may be:

- *Fibres*

- *Dispersion powders*

- *Wetting agents*

- *Polymeric resins*

- *Complexing agents*

- *Drying shrinkage reducing agents based on polyols.*

The total content of these optional other components in the dry mortar formulation is preferably comprised between 0.01% and 10% by weight of the total weight of the binder composition, advantageously between 0.1% and 8%, and more advantageously between 0.5% and 5%.

*The wet shotcrete formulation*

As mentioned above, the invention is in addition directed to a wet shotcrete formulation comprising:

A) An accelerator composition mentioned above,

B) A binder composition,

C) Aggregates,

D) Water

wherein the accelerator composition represents between 4 % by weight to 16% by weight with respect to the total weight of the binder composition,

and wherein the water is present at a weight ratio water/binder composition comprised between 0.30 and 0.60.

The accelerator ratios, the binder composition and the aggregates are the same as those defined above in the description of the dry shotcrete formulation.

*The weight ratio water to binder composition W/B*

In preferred embodiments, the water is present at a weight ratio water/binder composition comprised between 0.40 and 0.45.

*The hardened shotcrete article*

As mentioned above, the invention further concerns a hardened shotcrete article obtained after spraying and hardening the wet shotcrete formulation mentioned above.

*The rheological and the mechanical properties of the formulations according to the invention*

Shotcrete is a type of concrete that is sprayable onto surfaces by compressed air. So as to be sprayed in closed area, such as underground tunnels, the shotcrete formulation in the wet state has to set quickly in order to reach a minimum mechanical strength in a short time window for the safety of the workers.

Typically, the wet shotcrete formulation of the invention has a setting time between 20 minutes and 120 minutes, preferably less than 100 minutes, more preferably less than 60 minutes and even more preferably between 20 minutes and 40 minutes.

Generally, the wet shotcrete formulation of the invention, when hardening, reaches a compressive strength of at least 1 MPa in 4 hours, after completion of the whole wet shotcrete formulation, preferably of at least 4MPa in 4 hours.

*The method for preparing sprayable shotcrete formulations and spraying said formulation on a surface*

Shotcrete formulations can be sprayed in a wet form or in a dry form. In the wet form, components except for the accelerator are mixed before spraying the shotcrete. The accelerator is added just before the spray nozzle. In the dry form, all components are sprayed and water is added just before the spray nozzle. As a consequence, there is at least the two following methods for spraying the shotcrete according to the present invention.

In a first method, the invention is about a method for preparing dry sprayable shotcrete formulation and spraying said formulation on a surface comprising the step of:

(M1-S1)   Providing an accelerator composition as mentioned above,
(M1-S2)   Providing a binder composition,
(M1-S3)   Providing aggregates,
(M1-S4)   Mixing said accelerator composition, said binder composition and said aggregates, resulting in a dry shotcrete formulation,
(M1-S5)   Pumping the dry shotcrete formulation obtained at step M1-S4, resulting in a dry shotcrete flow,
(M1-S6)   Adding water into the dry shotcrete flow obtained at step M1-S5 resulting in a wet shotcrete formulation, upstream to a spraying nozzle,
(M1-S7)   Spraying the wet shotcrete formulation obtained at step M1-S6 through said spraying nozzle,

wherein the accelerator represents between 4 % by weight to 16% by weight with respect to the total weight of the binder composition,

and wherein the water is present at a weight ratio water/binder composition comprised between 0.30 and 0.60.

Typically, step M1-S6 is performed right before the entry in the spraying nozzle.

In preferred embodiments, the water is present at a weight ratio water/binder composition comprised between 0.35 and 0.50, and more preferably between 0.40 and 0.45.

In a second method, the invention is about a method for preparing wet sprayable shotcrete formulation and spraying said formulation on a surface comprising the step of:

(M2-S1)   Providing a binder composition,
(M2-S2)   Providing aggregates,
(M2-S3)   Mixing said binder composition and said aggregates, resulting in a dry shotcrete formulation,
(M2-S4)   Mixing the dry shotcrete formulation obtained at step M2-S3 with water resulting in a wet shotcrete formulation,
(M2-S5)   Pumping the wet shotcrete formulation obtained at step M2-S4 resulting in a wet shotcrete flow,
(M2-S6)   Adding an accelerator composition as mentioned above into the wet shotcrete flow obtained at step M2-S5, upstream to a spraying nozzle,

(continued)

(M2-S7)     Spraying the wet shotcrete formulation including said accelerator composition obtained at step M2-S6 through said spraying nozzle,

wherein the accelerator represents between 4 % by weight to 16% by weight with respect to the total weight of the binder composition,

and wherein the water is present at a weight ratio water/binder composition comprised between 0.30 and 0.60.

Typically, step M2-S6 is performed right before the entry in the spraying nozzle.

In preferred embodiments, the water is present at a weight ratio water/binder composition comprised between 0.35 and 0.50, and more preferably between 0.40 and 0.45.

According to the present disclosure, the term "mixing" has to be understood as any form of mixing.

**Examples**

The setting times are measured on mortars with Vicat apparatus applying the criteria defined in NF EN 196-3.

The compressive strengths are measured on 4x4x16 cm$^3$ mortar bars, applying measurement procedure described in NF EN 196-1.

*Example 1: influence of the accelerator according to the invention on the setting time*

9 mortars, containing: 550g of reactive powder (OPC and GGBS as binder, and the accelerator); 1350g of standardized sand (according to NF EN 196-1); 220g of water; and a varying content of superplasticizer (poly-carboxylates ether PCE based) has been prepared. These mortars included 0.8 or 12 wt% of the reactive powder of an accelerator, containing 75%wt. CAC comprising 40wt% of $Al_2O_3$ and 25% $Na_2SO_4$ in weight. Binder contained between 25wt% and 100wt% of OPC and between 0wt% and 75wt% of GGBS. Superplasticizer content was adjusted to get the same rheology on mortars without accelerator, no matter the OPC/GGBS ratio. Mortars setting time has been measured as reflected in table 1 below.

**[Table 1]**

| # | OPC (%) | GGBS (%) | accelerator (%) | W/B | SP (%) | IST** (min) | FST** (min) |
|---|---------|----------|-----------------|------|--------|-------------|-------------|
| 1 | 100 | 0 | 0 | 0.40 | 0.95 | >400 | 500 |
| 2 | 50 | 50 | 0 | 0.40 | 0.45 | >400 | 440 |
| 3 | 25 | 75 | 0 | 0.40 | 0.35 | >400 | 465 |
| 4 | 92 | 0 | 8 | 0.43 | 0.95 | 120 | 135 |
| 5 | 46 | 46 | 8 | 0.43 | 0.41 | 85 | 95 |
| 6 | 23 | 69 | 8 | 0.43 | 0.32 | 35 | 40 |
| 7 | 88 | 0 | 12 | 0.45 | 0.95 | 50 | 75 |
| 8 | 44 | 44 | 12 | 0.45 | 0.4 | 25 | 35 |
| 9 | 22 | 66 | 12 | 0.45 | 0.31 | 20 | 25 |
| *W/B: water-to-binder composition ratio, including OPC and GGBS <br> **IST: Initial Setting Time, FST: Final Setting Time. | | | | | | | |

As can be seen form table 1, the addition of the accelerator according to the invention leads to a strongly significant decrease of the setting time. (from more than 400 minutes to 20 minutes).

In addition, it can be seen that increasing the proportion of GGBS also decreases the setting time (120 to 85 to 35 and 50 to 25 to 20).

*Example 2: influence of the accelerator according to the invention on the compressive strength*

The compressive strengths of the 9 mortars of example 1 have been measured and reported in table 2 below.

**[Table 2]**

| # | OPC (%) | GGBS (%) | Accelerator (%) | W/B | Compressive strength (MPa) | | |
|---|---|---|---|---|---|---|---|
| | | | | | 4h | 28d | 91d |
| 2 | 50 | 50 | 0 | 0.40 | n.m. ** | 64.9 | 70.0 |
| 3 | 25 | 75 | 0 | 0.40 | n.m. ** | 65.4 | 69.3 |
| 5 | 46 | 46 | 8 | 0.43 | 1.7 | 46.0 | 48.4 |
| 6 | 23 | 69 | 8 | 0.43 | 2.2 | 38.9 | 39.7 |
| 8 | 44 | 44 | 12 | 0.45 | 1.8 | 29.4 | 49.9 |
| 9 | 22 | 66 | 12 | 0.45 | 5.4 | 37.1 | 43.5 |
| * W/B: water-to-binder composition ratio, including OPC and GGBS<br>**n.m.: not measurable | | | | | | | |

As can be seen form table 1 after 4h, all formulations according to the invention (4 to 9) reach more than 1 MPa after 4h. These results are below the objective of 4MPa at 4 hours, but it should be noted that they are obtained on poured mortars and not on shotcrete. Examples 4 and 5 obtained on real shotcrete trials are the ones to be considered for analysis of absolute compressive strength results.

*Example 3: influence of the cement A1 of the accelerator according to the invention on the compressive strength*

4 mortars including a 50/50 weight ratio OPC/GGBS mix, w/b = 0.43, accelerator and 10wt% of the accelerator as defined in table 3 below were prepared. Mortars were prepared using 485g of binder, and 1560g of a 0/4 siliceous alluvial sand. 1.05wt% of binder of superplasticiser (PCE based) was used to adjust the rheology of the mortar. Compressive strengths were determined on $4\times4\times16$ cm$^3$ mortar bars as described by NF EN 196-1.

| # | CSA | CAC (Al$_2$O$_3$ content %) | | | | Na$_2$SO$_4$ | Compressive strength (MPa) | |
|---|---|---|---|---|---|---|---|---|
| | | 36% | 40% | 50% | 70% | | 4h | 28d |
| 10 | 58 | 16 | | | | 26 | 1.2 | 55.5 |
| 11 | 58 | | 16 | | | 26 | 1.9 | 62.0 |
| 12 | 58 | | | 16 | | 26 | 3.3 | 60.7 |
| 13 | 58 | | | | 16 | 26 | 2.2 | 57.2 |

When combined all together, nature of CSA and CAC must be chosen with care. A clinker of CSA helps improving early strength and there is an optimum on Al$_2$O$_3$ content of the CAC (ideally 50%).

As can be seen form table 2 after 4h, all formulations according to the invention (10 to 13) reach more than 1 MPa after 4h. These results are below the objective of 4MPa at 4 hours, but it should be noted that they are obtained on poured mortars and not on shotcrete. Examples 4 and 5 obtained on real shotcrete trials are the ones to be considered for analysis of absolute compressive strength results.

*Example 4: Spraying a dry shotcrete formulation*

The method for preparing dry sprayable shotcrete formulation and spraying said formulation on a surface has been implemented as follows. Concrete formulation is indicated in mass of solids per volume unit (kg/m$^3$) as it is traditionally the case in this sector of activity:

(M1-S1) Providing an accelerator composition comprising 58% CSA (clinker), 16% CAC (-70% Al$_2$O$_3$) and 26%

$Na_2SO_4$

(M1-S2) Providing 400kg/m$^3$ of a binder composition comprising 50%wt. GGBS and 50%wt. OPC,

(M1-S3) Providing 2000kg/m$^3$ of aggregates having a $D_{max}$ maximum diameter of aggregates of 10mm,

(M1-S4) Mixing said accelerator composition, said binder composition and said aggregates, resulting in a dry shotcrete formulation,

(M1-S5) Pumping the dry shotcrete formulation obtained at step M1-S4, resulting in a dry shotcrete flow,

(M1-S6) Adding water into the dry shotcrete flow obtained at step M1-S5 resulting in a wet shotcrete formulation, upstream to a spraying nozzle,

(M1-S7) Spraying the wet shotcrete formulation obtained at step M1-S6 through said spraying nozzle. The weight ratio water/binder was estimated, by correlation between the flow of dry shotcrete and the flow of water supplied to a range comprise between 0.42 and 0.46.

Three trials have been made one without accelerator, one with 10 wt% with respect to the total weight of the binder composition and one with 15 wt% with respect to the total weight of the binder composition. The trials were carried out with an outside temperature of 20°C

As can be seen on figure 1, the accelerator allows reducing the setting time since the shotcretes with the accelerator reach a compressive strength of 5 MPa in about 20 minutes, while the reference shotcrete without the accelerator reaches less than 2 MPa in 20 minutes and only around 3.5 MPa after one hour. The evaluation of compressive strength can be overestimated with the static penetrometer test, but the positive effect of the accelerator on the speed of setting and hardening development is demonstrated.

Example 5: Spraying a wet shotcrete formulation

The method for preparing wet sprayable shotcrete formulation and spraying said formulation on a surface has been implemented as follows. Concrete composition is indicated in mass of solids per volume unit (kg/m$^3$) as it is traditionally the case in this sector of activity:

(M2-S1) Providing 480kg/m$^3$ of a binder composition comprising 50%wt. GGBS and 50%wt. OPC,

(M2-S2) Providing 1200kg/m$^3$ of sand; 500kg/m$^3$ of gravel ($D_{max}$ maximum diameter of aggregates 14mm as aggregates,

(M2-S3) Mixing said binder composition and said aggregates, resulting in a dry shotcrete formulation,

(M2-S4) Mixing the dry shotcrete formulation obtained at step M2-S3 with water, at a ratio W/B of 0.37 and a superplasticizer MasterGlenium SKY 800 provided by Master Builders Solutions®, resulting in a wet shotcrete formulation,

(M2-S5) Pumping the wet shotcrete formulation obtained at step M2-S4 resulting in a wet shotcrete flow,

(M2-S6) Adding an accelerator composition comprising 58% CSA (clinker), 16% CAC (-70% $Al_2O_3$) and 26% $Na_2SO_4$, into the wet shotcrete flow obtained at step M2-S5, upstream to a spraying nozzle,

(M2-S7) Spraying the wet shotcrete formulation including said accelerator composition obtained at step M2-S6 through said spraying nozzle.

The trial was carried out with an outside temperature of 8°C.As can be seen on figure 2, the shotcrete is classified as a J2 shotcrete according to NF EN 14487-1. Between 3 and 6 hours, the shotcrete is even on the upper line, respecting the objective of 4MPa at 4 hours.

**Claims**

1. An accelerator composition for hardening a wet shotcrete formulation comprising:

   A1. between 50 % by weight to 85% by weight of a cement containing at least 15 wt% aluminate, and
   A2. between 15% by weight and 50% by weight of at least one alkali sulfate.

2. The accelerator according to claim 1, wherein the cement A1 is selected in the group comprising, more preferably consisting of calcium aluminate cement, sulfoaluminate cement, BYF cement and mixtures thereof.

3. The accelerator according to any one of claims 1 and 2, wherein the cement A1 is a mixture of between 21wt% and 79wt%, preferably between 35wt% and 79wt%, more preferably between 45wt% and 79wt% of calcium aluminate cement (CAC), and 21wt% and 79wt%, preferably between 21% and 65wt%, more preferably between 21wt% and 35wt% of calcium sulfoaluminate cement (CSA).

4. The accelerator according to any one of claims 1 to 3, wherein the alkali sulfate is chosen in the group consisting of sodium sulfate, potassium sulfate, lithium sulfate and mixtures thereof, preferably the alkali sulfate is sodium sulfate.

5. The accelerator according to any one of claims 1 to 4, wherein it further comprises an alkaline metal salt, an alkanolamine or mixture thereof, preferably said alkaline metal salt is selected in the group comprising, more preferably consisting of, sodium chloride, potassium chloride, lithium chloride, sodium carbonate, potassium carbonate, lithium carbonate, sodium nitrate, potassium nitrate, lithium nitrate, sodium nitrite, potassium nitrite, lithium nitrite, calcium chloride, calcium nitrate, calcium nitrite, sodium thiocyanate, potassium thiocyanate, lithium thiocyanate and mixtures thereof, preferably said alkanolamine is selected in the group comprising, more preferably consisting of, triethanolamine (TEA), triisopropanolamine (TIPA), diethanolamine (DEA).

6. A dry shotcrete formulation comprising:

   A) The accelerator composition according to any one of claims 1 to 5,
   B) A binder composition,
   C) Aggregates,

   wherein the accelerator represents between 4 % by weight to 16% by weight with respect to the total weight of the binder composition.

7. The dry shotcrete formulation according to claim 6, wherein the binder composition is a mixture of:

   a. 5% and 95% of a clinker source or a lime source, or mixtures thereof,
   b. 5% and 95% of ground granulated blast furnace slag, pozzolanic materials or mixtures thereof.

8. A wet shotcrete formulation comprising:

   A) An accelerator composition according to any one of claims 1 to 5,
   B) A binder composition,
   C) Aggregates,
   D) Water
   wherein the accelerator represents between 4 % by weight to 16% by weight with respect to the total weight of the binder composition,
   and wherein the water is present at a weight ratio water/binder composition comprised between 0.30 and 0.60.

9. The wet shotcrete formulation according to claim 8, wherein the binder composition is a mixture of:

   a. 5% and 95% of a clinker source or a lime source, or mixtures thereof,
   b. 5% and 95% of ground granulated blast furnace slag, pozzolanic materials or mixtures thereof.

10. The wet shotcrete formulation according to any one of claims 8 to 9, wherein the water/binder composition weight ratio is comprised between 0.35 and 0.50, and more preferably 0.40 and 0.45.

**11.** A hard shotcrete article obtained after spraying and hardening the wet shotcrete formulation of any one of claims 8 to 10.

**12.** A method for preparing dry sprayable shotcrete formulation and spraying said formulation on a surface comprising the step of:

(M1-S1)  Providing an accelerator composition according to any one of claims 1 to 5,
(M1-S2)  Providing a binder composition,
(M1-S3)  Providing aggregates,
(M1-S4)  Mixing said accelerator composition, said binder composition and said aggregates, resulting in a dry shotcrete formulation,
(M1-S5)  Pumping the dry shotcrete formulation obtained at step M1-S4, resulting in a dry shotcrete flow,
(M1-S6)  Adding water into the dry shotcrete flow obtained at step M1-S5 resulting in a wet shotcrete formulation, upstream to a spraying nozzle,
(M1-S7)  Spraying the wet shotcrete formulation obtained at step M1-S6 through said spraying nozzle,

wherein the accelerator represents between 4 % by weight to 16% by weight with respect to the total weight of the binder composition,
and wherein the water is present at a weight ratio water/binder composition comprised between 0.30 and 0.60.

**13.** The method according to claim 12, wherein the water/binder composition weight ratio is comprised between 0.35 and 0.50, and more preferably 0.40 and 0.45.

**14.** A method for preparing wet sprayable shotcrete formulation and spraying said formulation on a surface comprising the step of:

(M2-S1)  Providing a binder composition,
(M2-S2)  Providing aggregates,
(M2-S3)  Mixing said binder composition and said aggregates, resulting in a dry shotcrete formulation,
(M2-S4)  Mixing the dry shotcrete formulation obtained at step M2-S3 with water resulting in a wet shotcrete formulation,
(M2-S5)  Pumping the wet shotcrete formulation obtained at step M2-S4 resulting in a wet shotcrete flow,
(M2-S6)  Adding an accelerator composition according to any one of claims 1 to 5 into the wet shotcrete flow obtained at step M2-S5, upstream to a spraying nozzle,
(M2-S7)  Spraying the wet shotcrete formulation including said accelerator composition obtained at step M2-S6 through said spraying nozzle,

wherein the accelerator represents between 4 % by weight to 16% by weight with respect to the total weight of the binder composition,
and wherein the water is present at a weight ratio water/binder composition comprised between 0.30 and 0.60.

**15.** The method according to claim 14, wherein the water/binder composition weight ratio is comprised between 0.35 and 0.50, and more preferably 0.40 and 0.45

[Fig. 1]

[Fig. 2]

Europäisches
Patentamt

European
Patent Office

Office européen
des brevets

# EUROPEAN SEARCH REPORT

Application Number

EP 23 30 5206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/156808 A1 (HOLCIM TECHNOLOGY LTD [CH]) 12 August 2021 (2021-08-12) <br> * claims 1,2,7 * <br> * pages 1-10 * <br> ----- | 1-4,6-15 | INV. <br> C04B28/08 <br> C04B40/00 <br><br> ADD. <br> C04B103/12 |
| X | EP 1 180 505 A1 (DENKI KAGAKU KOGYO KK [JP]) 20 February 2002 (2002-02-20) <br> * paragraphs [0001] - [0057] * <br> ----- | 1-15 | |
| X | JP H11 292590 A (DENKI KAGAKU KOGYO KK) 26 October 1999 (1999-10-26) <br> * the whole document * <br> ----- | 1-15 | |

TECHNICAL FIELDS
SEARCHED      (IPC)

C04B

The present search report has been drawn up for all claims

| Place of search | Date of completion of the search | Examiner |
|---|---|---|
| Munich | 27 July 2023 | Gattinger, Irene |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 5206

This annex lists the patent family members relating to the patent documents cited in  the above-mentioned European search report.
The members are as contained in the European Patent Office EDP file on
The European Patent Office is in no way liable for these particulars which are merely given for the purpose of information.

27-07-2023

| Patent document cited in search report | | Publication date | Patent family member(s) | | Publication date |
|---|---|---|---|---|---|
| WO 2021156808 | A1 | 12-08-2021 | EP | 3862335 A1 | 11-08-2021 |
| | | | EP | 4100379 A1 | 14-12-2022 |
| | | | WO | 2021156808 A1 | 12-08-2021 |
| EP 1180505 | A1 | 20-02-2002 | AT | 265401 T | 15-05-2004 |
| | | | DE | 60010252 T2 | 26-08-2004 |
| | | | EP | 1180505 A1 | 20-02-2002 |
| JP H11292590 | A | 26-10-1999 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021156808 A

- FR 2233295